Europäisches Patentamt

European Patent Office

Office européen des brevets

(19)

(11) Publication number: **0 304 265 B1**

(12) **EUROPEAN PATENT SPECIFICATION**

(45) Date of publication of patent specification: **08.07.92**   (51) Int. Cl.⁵: **B60T 8/50**, B60T 8/58

(21) Application number: **88307571.5**

(22) Date of filing: **16.08.88**

(54) Improvements in fluid-pressure operated anti-skid braking systems for vehicles.

(30) Priority: **19.08.87 GB 8719550**

(43) Date of publication of application:
**22.02.89 Bulletin  89/08**

(45) Publication of the grant of the patent:
**08.07.92 Bulletin  92/28**

(84) Designated Contracting States:
**DE FR GB IT**

(56) References cited:
**EP-A- 0 236 085**
**DE-A- 2 555 998**
**GB-A- 1 559 815**
**GB-A- 2 130 668**
**US-A- 3 936 096**

(73) Proprietor: **GRAU LIMITED**
**Arrowdale Road**
**Redditch Worcestershire B98 7EZ(GB)**

(72) Inventor: **McCann, Denis John**
**10 Derwen Fawr Llanbedr Road**
**Crickhowell Powys Wales(GB)**
Inventor: **Williams, Allan**
**12 Ty Clyd Close Govilon**
**Abergavenny Gwent NP7 9PJ Wales(GB)**
Inventor: **Carswell, Edwin Robert**
**5 Ty Clyd Close Govilon**
**Abergavenny Gwent Wales(GB)**
Inventor: **Broome, William Sydney**
**Brackendale 53 Pepper Street**
**Inkberrow Worcestershire WR7 4EJ(GB)**

(74) Representative: **Lally, William et al**
**FORRESTER & BOEHMERT Franz-**
**Joseph-Strasse 38**
**W-8000 München 40(DE)**

## Description

This invention relates to improvements in fluid-pressure operated braking systems for vehicles of the kind comprising a supply of brake-operating fluid for actuating a wheel brake which supplies fluid to the brake through a skid control unit, a line which supplies control fluid to the fluid control unit from a supply, sensors provided to detect wheel skids and means responsive to a skid signal produced by any of the sensors are incorporated for operating valve means to relieve the pressure of the control fluid, and thus of the brake-operating fluid, at a skid point, and the unit incorporating a memory chamber for storing a memory pressure dependant upon the control pressure, and thus on the brake-operating fluid pressure, occurring at the skid point to provide a datum or knee point between first and second stages of brake re-application, the brake being re-applied in the first stage of brake re-application at a relatively higher rate than it is re-applied in the second stage of brake re-application, the rate of brake re-application in said second stage being at a reduced rate in comparison to that at which the brake is applied before a skid point is detected and the brake on the wheels at opposite ends of a common axle each being controlled by a separate skid control unit (GB-A-2130668). Such systems will hereinafter be referred to as "of the kind set forth".

In our EP-A-0236085 we have disclosed a fluid-pressure operated braking system of the kind set forth in which a single latch valve common to both skid control units closes at the first skid point to be sensed by a sensor on either wheel, whereafter the rate of re-application of the two brakes is controlled in response to signals from the individual sensors, but at rates of pressure increase determined by the memory chamber of each respective unit, and by restricted flows of brake-applying fluid.

Specifically, in the system of EP-A-0236085, when a split $\mu$ situation arises, both brakes will be released at the same time, but the brake on the wheel which is first to recover is first re-applied through the two stages, followed by re-application of the brake on the other wheel when that wheel has recovered. It follows, therefore that there will be a reduction in pressure applied to the wheel on the surface of higher $\mu$, irrespective of whether or not the sensor on that wheel has emitted a skid signal.

In the preferred construction disclosed in EP-A-0236085 each skid control unit incorporates a solenoid-operated relay valve, and the latch valve is also operated by a solenoid, the wheel speed sensors producing signals which are fed into a control module which, in turn, is operative to supply an energising current to all three solenoids in response to a skid signal from one sensor, and thereafter to cause the solenoids of the relay valves to become de-energised to modulate control of the brakes individually, with the current maintained to the latch valve to hold it shut throughout that braking cycle.

According to our present invention in a fluid-pressure operated braking system of the kind set forth, a single latch valve is provided common to both units and closes at the first skid point to be sensed by a sensor on either wheel, and a control module responsive to signals from at least one of the sensors is operative to operate the latch valve to control the rate of supply of control fluid from the supply, and to control the skid control units for the respective wheels in response only to the respective skid signals relating to the respective wheels which the skid control units control, independent of the skid signals relating to the other wheel on the axle.

Since a signal from either sensor is operative to close the latch valve, any increase in pressure from the supply and intended for a brake will be at a reduced rate of pressure increase as determined by the latch valve and irrespective of whether or not the respective skid control unit is also operative.

It follows, therefore, that when both wheels are travelling over surfaces of identical low $\mu$'s, both brakes will be released at the same time in response to signals from both sensors, and the brakes will then be re-applied in substantially similar sequences, namely in a first relatively rapid stage up to the knee point, determined by the memory pressure, followed by a second, slower stage by the restricted flow to each brake as determined by the latch valve.

When a split $\mu$ situation arises and only the sensor associated with the wheel on the surface of lower $\mu$ emits a signal, then the latch valve closes and the brake on the wheel on the surface of lower $\mu$ is released, the brake on the other wheel continuing to be applied but at a reduced rate of pressure increase as determined by the latch valve.

This has the advantage that there will be no reduction in the pressure applied to the brake on the wheel travelling over the surface of higher $\mu$, provided that no signal is emitted by the sensor associated with that wheel.

In a preferred construction each skid control unit incorporates a solenoid-operated relay valve, and the latch valve is also operated by a solenoid, the control module being operative to supply an energising current to the latch valve and to one of the relay valves in response to a signal from the respective sensor, and thereafter to cause the solenoid of the said one relay valve to become de-energised to modulate control of the respective brake, with the current maintained to the latch valve to hold it shut throughout that braking cycle.

We may also provide the memory chamber of each skid control unit with an associated memory pressure decay means which causes the memory pressure stored in the memory chamber to decay when a skid point is detected for the wheel associated with the respective skid control unit from an initial valve substantially equal to the brake-applying pressure immediately before the skid point was detected to a lower pressure.

The pressure to which the memory pressure decays is preferably dependent on the duration of the skid. The memory pressure decay means may comprise a restricted passage communicating the memory chamber with the downstream side of the latch valve. In our preferred construction it communicates the memory chamber with the upstream side of the relay valve.

One embodiment of our invention is illustrated in the accompanying drawings in which:-

Figure 1 is a layout of a two-axle vehicle provided with a relay-operated anti-skid pneumatic braking system;

Figure 2 is a schematic layout in more detail of the system arrangement for the rear axle;

Figure 3 is a performance graph;

Figure 4 is a end view of one practical form of control unit with all the valves and other components incorporated within a common housing;

Figure 5 is a section on the line 5-5 of Figure 4;

Figure 6 is a plan of the unit;

Figure 7 is a section on the line 7 - 7 of Figure 6;

Figure 8 is an end elevation of a one-way valve incorporated in the system and the control unit; and

Figure 9 is a section on the line 9 - 9 of Figure 8

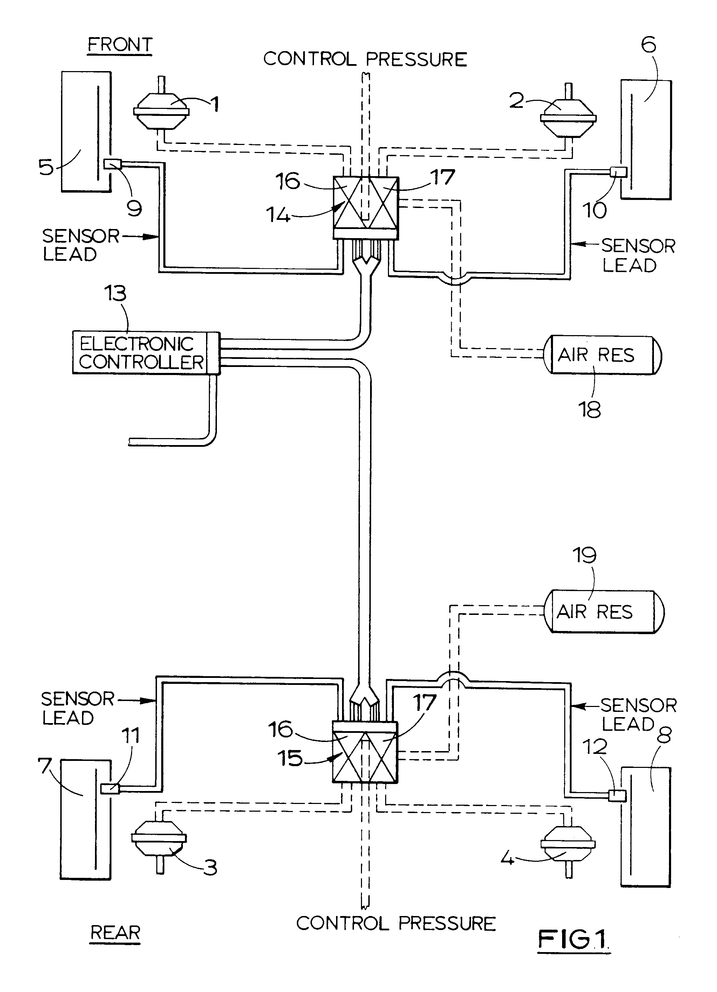

The anti-skid pneumatic braking system illustrated in Figure 1 of the drawings is similar to that of EP-A-0236085. In the anti-skid pneumatic braking system illustrated in Figure 1 of the drawings brakes 1, 2, 3, 4 are provided on each of two front wheels 5 ,6 on a first axle of a vehicle, and on two rear wheels 7, 8 on a second axle of the vehicle, respectively. Each wheel is provided with a respective speed sensor 9, 10, 11 and 12, and the output signals from the sensors are fed into an electronic control module 13 which differentiates the signals and emits energising currents for operating front and rear skid control units 14 and 15.

Each skid control unit 14, 15 controls the supply of control pneumatic fluid pressure under the control of a treadle valve 29 to a relay valve 16, 17 for each respective wheel, and each relay valve 16, 17 in turn, controls the supply of air under pressure from a reservoir 18, 19 to the brakes 1 and 2, and 3 and 4.

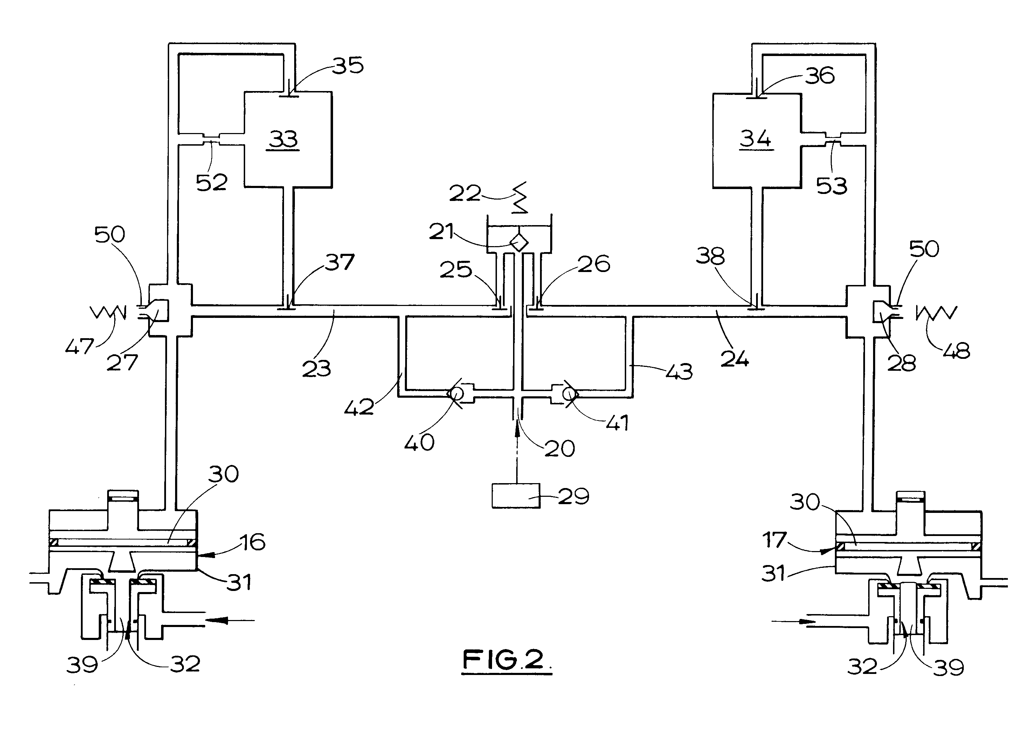

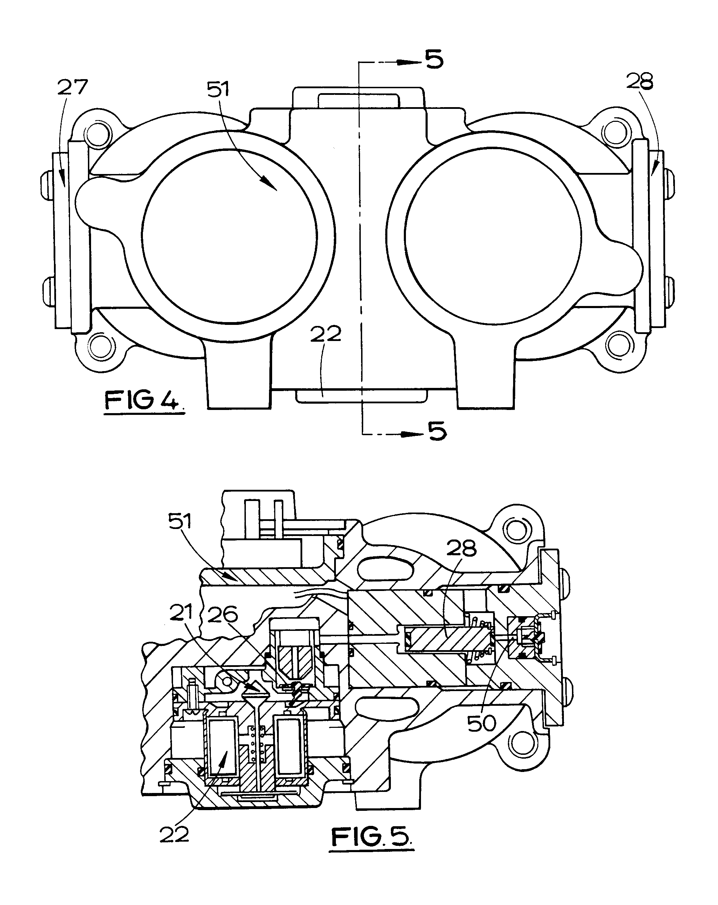

The arrangement provided on the front axle is in accordance with EP-A-0236085, but the modified arrangement applied to the rear axle and as illustrated in Figure 2 will be described. As illustrated Figure 2 shows, schematically, the construction of the skid control unit 16 for the brakes 3, 4 on the rear axle.

As illustrated control fluid from the treadle valve 29 is supplied to an inlet passage 20 and through a normally open latch valve 21, operated by a solenoid 22, to the two relay valves 16 and 17 through passages 23 and 24 respectively. A one-way valve 25, 26 respectively, and a solenoid-operated cut-off valve 27, 28, respectively, each incorporating a normally closed exhaust port, are located in each passage 23 and 24 between the latch valve 21 and the respective relay valve 16, 17.

Each relay valve 16, 17 is of known construction incorporating a piston 30 working in a bore 31 and operable, in response to the pressure of the control fluid, to control a main valve 32 between the common reservoir 19, the respective brake 3, 4, and a central exhaust passage 39.

A memory chamber 33, 34 is disposed between each solenoid valve 27, 28 and a connection in the passage 23, 24 between the one-way valve 25, 26 and the solenoid valve 27, 28, and one-way valves 35, 36 and 37, 38 are provided between the solenoid-operated valves 27, 28 and the chambers 33, 34, and between the memory chambers 33, 34 and the passages 23, 24. Each memory chamber 33, 34 is provided with a restricted passage 52, 53, through which the pressure can decay at a slow rate towards the upstream side of the valves 27 and 28 respectively.

Finally a one-way valve 40, 41 is provided in a passage 42, 43 leading from the inlet passage 20 to each respective passage 23, 24 on the downstream side of the latch valve 21, between the two one-way valves 25, 37 and 26, 38 respectively.

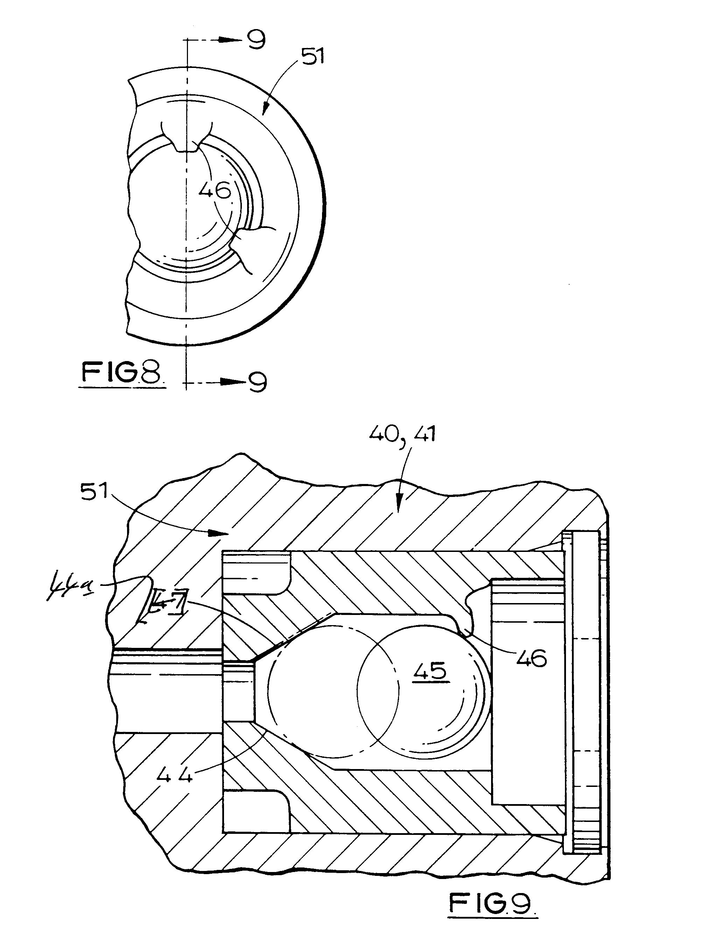

Each one-way valve 40,41 is illustrated on an enlarged scale in Figures 8 and 9 of the drawings. As illustrated each valve comprises a seating 44 of frusto-conical outline, and a valve member 45 in the form of a ball for engagement with seating 44. The movement of the ball 45 away from the seating is limited by three angularly spaced inwardly directed radial fingers 46 and, when the ball 45 is in engagement with the seating 44, a limited flow past the ball is permitted through a notch 44a in the seating 44.

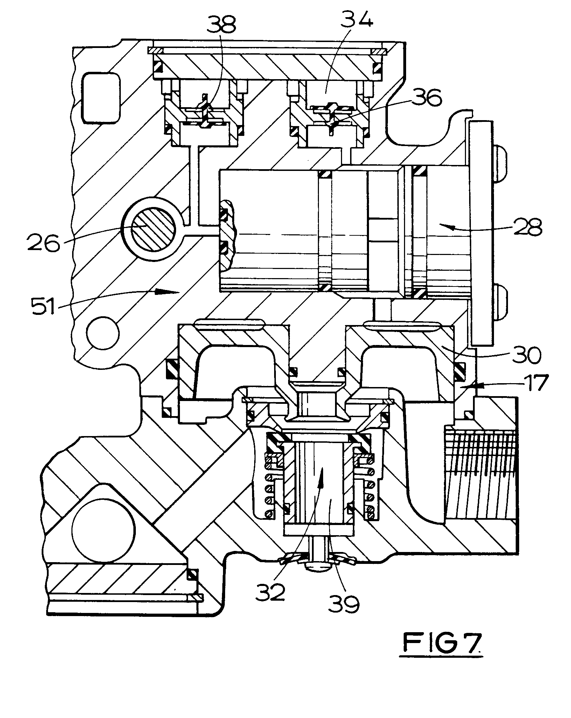

As shown in Figures 4 to 7, all the valves 21, 40, 41, 35, 37, 36, 38, 27, 28, 16 and 17 and other components (33, 34) on each axle are housed and defined within a common housing 51.

The solenoid 22 of the latch valve and solenoids 47, and 48 of the valve 27 and 28 are adapted to be energised by a current from the control module 13. Specifically the control module 13 is arranged to energise the solenoid 22 and the solenoid 47 in response to a signal from the respective sensor 11, and separately to energise the solenoid 22 and the solenoid 48 in response to a signal from the sensor 12. When any such current is emitted, the solenoid 22 will be energised before, or simultaneously with, the respective solenoid 47 or 48.

In a normal inoperative position shown in Figure 2 of the drawings, three solenoids 22, 47, and 48 are de-energised so that the latch valve 21 and the valves 27 and 28 are in the open position. Both relay valves 16, 17 are closed to isolate the brakes 3 and 4 from the reservoir 19.

Upon operation of the treadle valve 29 the control fluid is supplied to the inlet passage 20, and through the open latch valve 21, since the one way valves 40, 41 are closed by that pressure. The control fluid flows through the one-way valves 25 and 26, the passages 23 and 24, and the open valves 27 and 28 to act on the pistons 30 of the relay valves 16, 17. In addition the control fluid enters both memory chambers 33 and 34 through the respective one-way valves 35. The whole system is therefore subjected throughout to an equal control fluid pressure.

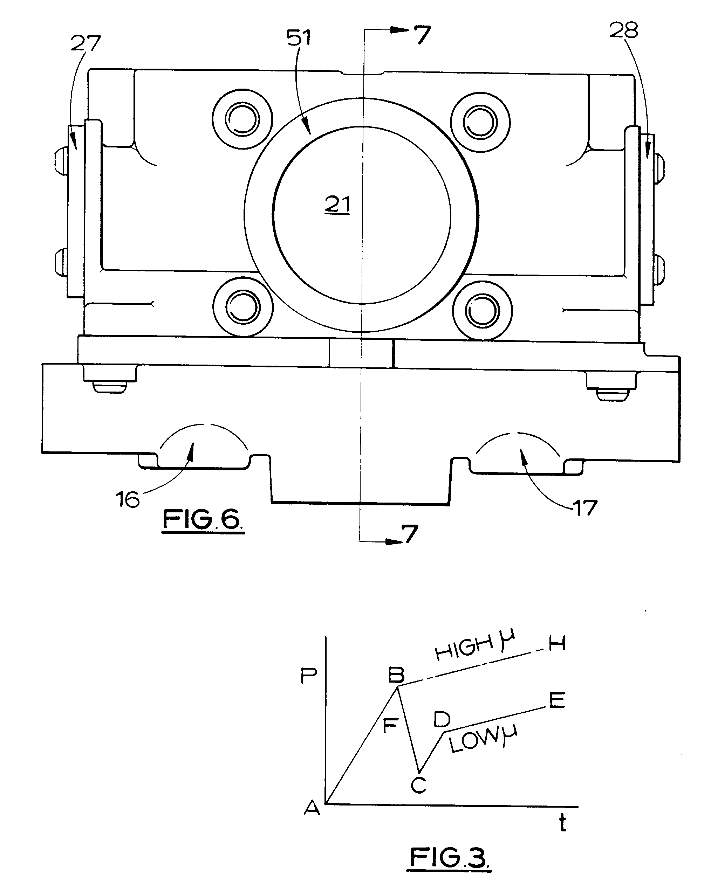

The pressure acting on the pistons 30 causes both relay valves 16, 17 to operate in a known manner to supply air under pressure from the reservoir 19 to the actuators of the brakes in order to apply both brakes 3, 4 simultaneously. The pressure rises with time as shown in the portion A, B of the graph of Figure 3.

Upon release of the treadle at the end of the braking cycle, air from the brakes 3, 4 is released to atmosphere through the exhaust passages 39, and the control fluid is released through the one-way valves 40 and 41 and an exhaust port on the treadle valve.

When the brakes 3, 4 are applied as described above and both wheels of the vehicle pass onto a surface of a low co-efficient of friction ($\mu$) which is sufficiently low for both sensors 11, 12 to emit skid signals substantially simultaneously, an equivalent energising current is emitted by the control module 13 to energise the three solenoids 22, 47 and 48 and thereby close the latch valve 21, and both valves 27 and 28.

Closure of the latch valve 31 isolates the direct flow of control fluid from the inlet passage 20 to the passages 23, and 24, but a restricted flow into the passages 23 and 24 still takes place through the notches 44a in the seating 44 of the one-way valve 40, 41.

Closure of the valves 27, 28 isolates the passages 23 and 24 from the relay valves 16 and 17, which close by the exhaustion to atmosphere through the exhaust port 50 of the control fluid acting on the pistons 30. The pressure then drops from point B as shown in Figure 3.

Due to the presence of the one-way valve 35, 36, a memory pressure is trapped in each memory chamber, and that pressure is equal to the value of the control pressure applied to the pistons 30 when the skid signals were emitted by the sensors 11, 12 at the skid point. However, the pressure in each memory chamber 33, 34 is permitted to decay at a rate determined by flow through the respective restricted passage 52, 53, which rate of decay is matched to the rate at which the pressure applied to the relay valves 17, 18 during the first stage of brake re-application would otherwise increase due to the restricted flow of control fluid through the notch 44a increasing the pressure in the passages 23, 42 and 24, 41 upstream of valves 27, 28.

When each wheel recovers and the skid signals are cancelled, say when the brake pressure has reduced to point C in Figure 3, indicative that the quality of the road surface has improved sufficiently for the brakes 7, 8 to be re-applied, the control module 13 cuts-off the energising current to the two solenoids 47, 48 so that these two valves open again, but the solenoid 22 remains energised to hold the latch valve 21 in its closed position.

Opening the valves 27, 28 enables the pressures trapped in the memory chambers 33, 34 to be released through the one-way valves 37, 38 to act on the pistons 30 and act as application pressures to cause the relay valves 16, 17 to operate again to re-apply the brakes 3, 4 as described above.

Since the volumes of the chambers 33, 34 have to fill the remainder of the passages and the spaces in the bores 31 above the pistons 30, known as the application chambers, such volumes will only be sufficient to raise the brake pressure rapidly in a first stage up to a knee or changeover point D, as shown in Figure 3, which is lower than the said point B. Thereafter the brakes are re-applied, in a second stage, but at a rate of pressure increase slower than that of the first, by the flow to the relay valves 16, 17 of a restricted flow of fluid through the notches 47 in the seatings of the one-way valves 40, 41. This is depicted in the graph of Figure 3 by the line D E.

The restricted passages 52, 53 ensure that the pressures in the memory chamber 33, 34 have not increased, which otherwise might cause the brakes to be re-applied in the first stage to a point in excess of the desired point D. Should the skid last for a significant period of time the pressure in passages 42, 43, and 23, 24, will increase due to restricted flow past one way valves 40, 41. The decay passages 52, 53 enable the pressure in the memory chambers to decrease during the skid to compensate for the build up in pressure in the passages upstream of the relay valves 27, 28. Thus any tendency for such "overshoot" to occur is avoided and we maintain the height of point D constant independent of the duration of the skid.

Should a further skid condition occur during the application of the brakes in a common cycle, then the sequence of brake release, and brake re-application as described above, will be repeated.

When the brakes are applied as described above, and one wheel, say the wheel 7, passes onto a surface of low $\mu$ with the other wheel travelling over a surface of high $\mu$, a so-called split $\mu$ situation arises.

Provided the surface of high $\mu$ is sufficiently high for no skid signal to be emitted by the sensor 12, only the sensor 11 will emit a skid signal, in response to which the control module 13 energises the solenoid 22, and the solenoid 47 to close the latch valve 21, and the valve 27. The pressure applied to the brakes 3 is then relieved as described above.

Since no skid signal had been emitted by the speed sensor 12, the solenoid 48 remains de-energised and the brake 4 continues to be applied. However any increase in pressure applied to the brake 4 is controlled by a control fluid pressure which can increase only at a rate determined by flow through the notch 44a in the one-way valve 41, due to closure of the latch valve 21, which occurs at the skid point B. Thus, such a rate of pressure increase from B to H is equivalent to that normally experienced in a second stage of brake re-application, as indicated in the graph of Figure 3 by the portion shown from D to E.

The control module 13 is arranged to take into account the behaviour of all the wheels, and a latch valve 21 on each axle, when closed during a skid cycle, will remain closed until the control module 13 has demanded, from information from all four speed sensors 9, 10, 11 and 12, that the vehicle has moved onto a sufficiently good surface for the anti-lock system to be de-activated, and for the latch valves 21 to re-open.

Naturally the release of the brakes at the end of a braking cycle will de-activate the anti-lock system.

The one-way valves 25, 26 are provided to ensure that the two brake circuits on each axle are separate from each other, and there can be no mixing of the air on the two circuits, particularly after the latch valve 21 has closed.

The arrangement described above for the brakes on the rear axle may also be provided for the brakes on the front axle.

We may choose to arange the memory pressue decay means 52, 53 such that the longer the duration of the skid the lower the knee point D to which the brakes are eventually re-applied in a first stage of brake re-application. This may in any case occur in a very long skid if the pressure in passage 23, 42; 24, 33 reaches the maximum pressure that the supply 29 can achieve whilst the memory pressure continues to decrease.

## Claims

1. A fluid-pressure operated braking system for vehicles comprising a supply (18, 19) of brake-operating fluid for actuating a wheel brake (1, 2, 3, 4) which supplies fluid to the brake through a skid control unit (14, 15), a line (23, 24) which supplies control fluid to the fluid control unit (14, 15) from a supply (29), sensors (9, 10, 11, 12) provided to detect wheel skids, and means (13) responsive to a skid signal produced by any of the sensors (9, 10, 11, 12) are incorporated for operating valve means (27, 28) to relieve the pressure of the control fluid, and thus of the brake-operating fluid, at a skid point, the unit (14, 15) incorporating a memory chamber (33, 34) for storing a memory pressure dependant upon the control pressure, and thus on the brake-operating fluid pressure, occurring at the skid point to provide a datum or knee point between first and second stages of brake re-application, the brake (1, 2, 3, 4) being reapplied in the first stage of brake re-application at a relatively higher rate than it is re-applied in the second stage of brake re-application, the rate of brake re-application in said second stage being at a reduced rate in comparison to that at which the brake is applied before a skid point is detected and the brakes (1,2, 2,4) on the wheels at opposite ends of a common axle each being controlled by a separate skid control unit (14, 15) characterised in that a single latch valve (21) is provided common to both units and closes at the first skid point to be sensed by a sensor (9, 10, 11, 12) on either wheel, and a control module (13) responsive to signals from at least one of the sensors is operative to operate the latch valve (21) to control the rate of supply of control fluid from the supply (29), and to control each of the skid control units (14, 15) for the respective wheels in response only to the respective skid signals relating to the respective wheel which the skid control unit controls, independent of the skid signals relating to the other wheel on the axle.

2. A braking system according to Claim 1, characterised in that when the wheels on opposite ends of the axle are travelling over surfaces of different co-efficients of friction and one of the wheels skids during a braking operation whilst the other wheel does not skid, the control module (13) controls the common latch valve (21) so as close the common latch valve to provide a restricted flow of control fluid from the supply (29), controls the skid control unit (16, 17) on the one wheel so as to relieve the braking pressure in the brake of the one wheel until that wheel has stopped skidding, and controls the skid control unit (14, 15) of the other wheel so as to continue to apply the brake on the other wheel but at the rate of the second stage of brake re-application, the brake of the one wheel being re-applied in said first and second stages when the one wheel has stopped skidding, there being substantially no reduction in the pressure applied to the brake of the other wheel when the common latch valve (21) is closed.

3. A braking system according to Claim 1 or Claim 2, characterised in that each skid control unit (14, 15) incorporates a solenoid-operated relay valve (27, 28), and the module (13) is operative to supply an energising current to the latch valve (21) and to one of the relay valves (27, 28) in response to a signal from the respective sensor, and thereafter to cause the solenoid of the said one relay valve to become de-energised to modulate control of the respective brake, with the current maintained to the latch valve to hold it shut throughout that braking cycle.

4. A braking system according to any preceding claim, characterised in that a latch-bypass passage (42,43) having a latch-bypass valve (40,41) communicates the supply (29) with a point in the line (23,24) downstream of the latch valve (21), and flow of control fluid at the reduced rate when the latch valve (21) is closed occurs through the latch-bypass passage.

5. A braking system according to any preceding claim, characterised in that the memory chamber (33,34) of each skid control unit (16,17) has an associated memory pressure decay means (52,53) which causes the memory pressure stored in the memory chamber to decay when a skid point is detected for the wheel associated with the respective skid control unit from an initial value substantially equal to that of the brake-applying pressure immediately before the skid point was detected to a lower pressure.

6. A braking system according to Claim 5, characterised in that the pressure to which the memory pressure decays during a skid is dependant on the duration of the skid.

7. A braking system according to Claim 5 or Claim 6, characterised in that the memory pressure decay means comprises a restricted passage (52,53) communicating the memory chamber (33,34) with the downstream side of the latch valve (21).

8. A braking system according to Claim 7 as dependant on Claim 3, characterised in that the memory pressure decay means comprises a restricted passage (52,53) communicating the memory chamber (33,34) with the upstream side of the relay valve (27,28).

9. A braking system according to any one of Claims 5 to 8 as they depend on Claim 4, characterised in that the rate of decay of memory pressure in the memory chamber during a skid is substantially equal to the rate of increase in pressure of the brake-operating fluid which flows past the latch-bypass valve (40,41).

10. A skid control system according to any preceding claim, characterised in that the common axle comprises the rear axle of a vehicle.

**Revendications**

1. Système de freinage de véhicule, commandé par pression de fluide, comportant une alimentation (18, 19) en fluide d'actionnement de frein destiné à actionner un frein (1, 2, 3, 4) de roue, qui délivre du fluide au frein par l'intermédiaire d'une unité (14, 15) de contrôle du patinage, une conduite (23, 24) qui délivre à l'unité de contrôle du patinage (14, 15) du fluide de contrôle en provenance d'une alimentation (29), des capteurs (9, 10, 11, 12) prévus pour détecter le patinage des roues, et des moyens (13) sensibles à un signal de patinage produit par l'un quelconque des capteurs (9, 10, 11, 12) incorporés de façon à actionner des moyens formant soupapes (27, 28) afin de relâcher la pression du fluide de contrôle, et ainsi celle du fluide d'actionnement de frein, au niveau d'un point de patinage, l'unité (14, 15) comportant une chambre de mémoire (33, 34) destinée à stocker une pression de mémoire qui dépend de la pression de contrôle, et ainsi de la pression du fluide d'actionnement de frein, et qui apparaît au niveau du point de patinage, afin de fournir un point d'inflexion ou de référence entre des premier et deuxième étages de réactionnement du frein, le frein (1, 2, 3, 4) étant réactionné dans le premier étage de réactionnement du frein suivant un taux relativement plus élevé que lorsqu'il est réactionné dans le deuxième étage de réactionnement du frein, le taux de réactionnement du frein dans ledit deuxième étage étant un taux réduit comparé à celui selon lequel le frein est actionné avant qu'un point de patinage soit détecté, et les freins (1, 2, 3, 4) sur les roues situées aux extrémités opposées d'un essieu commun étant contrôlés chacun par une unité de contrôle de patinage séparée (14, 15), caractérisé en ce qu'une soupape de verrouillage unique (21) est prévue en commun pour les deux unités et se ferme au niveau du premier point de patinage devant être détecté par un capteur (9, 10, 11, 12) sur l'une des roues, et un module de contrôle (13) sensible aux signaux provenant d'au moins un des capteurs agit de façon à actionner la soupape de verrouillage (21) afin de commander le débit de fluide de contrôle provenant de l'alimentation (29), et de façon à commander chacune des unités de contrôle de patinage (14, 15) des roues respectives en réponse uniquement aux signaux de patinage respectifs se rapportant à la roue respective que l'unité de commande de patinage contrôle, indépendamment des signaux de patinage se rapportant à l'autre roue de l'essieu.

2. Système de freinage selon la revendication 1, caractérisé en ce que, lorsque les roues situées à des extrémités opposées de l'essieu se déplacent sur des surfaces ayant des coefficients de friction différents et que l'une des roues patine lors d'une action de freinage alors que l'autre roue ne patine pas, le module de commande (13) commande la soupape de verrouillage commune (21) de façon à fermer la soupape de verrouillage commune afin de procurer un flux restreint du fluide de contrôle provenant de l'alimentation (29), commande l'unité de contrôle de patinage (16, 17) de la première roue de façon à relâcher la pression de freinage dans le frein de la première roue jusqu'à ce que la roue ait cessé de patiner, et commande l'unité de contrôle de patinage (14, 15) de l'autre roue de façon à poursuivre l'actionnement du frein de l'autre roue, mais suivant le taux du deuxième étage de réactionnement du frein, le frein de la première roue étant réactionné dans lesdits premier et deuxième étages lorsque la première roue a cessé de patiner, aucune réduction de la pression appliquée sur le frein de l'autre n'ayant sensiblement lieu lorsque la soupape de verrouillage commune (21) est fermée.

3. Système de freinage selon la revendication 1 ou la revendication 2, caractérisé en ce que chaque unité de contrôle de patinage (14, 15) comporte une soupape-relais actionnée par électroaimant (27, 28), et le module (13) fonctionne de façon à délivrer un courant d'excitation à la soupape de verrouillage (21) et à l'une des soupapes-relais (27, 28) en réponse à un signal provenant du capteur respectif, et de façon à amener ensuite l'électroaimant de ladite première soupape-relais à être désexcité afin de moduler la commande du frein respectif, le courant étant maintenu sur la soupape de verrouillage afin de la maintenir fermée pendant tout le cycle de freinage.

4. Système de freinage selon l'une quelconque des revendications précédentes, caractérisé en ce qu'un passage de dérivation de verrouillage (42, 43) comportant une soupape de dérivation de verrouillage (40, 41) fait communiquer l'alimentation (29) avec un point de la conduite (23, 24) situé en aval de la soupape de verrouillage (21), et l'écoulement de fluide de contrôle au débit réduit lorsque la soupape de verrouillage (21) est fermée se fait par le passage de dérivation de verrouillage.

5. Système de freinage selon l'une quelconque des revendications précédentes, caractérisé en ce que la chambre de mémoire (33, 34) de chaque unité de contrôle de patinage (16, 17) possède des moyens de réduction de pression de mémoire associés (52, 53) qui amènent la pression de mémoire stockée dans la chambre de mémoire à baisser, lorsqu'un point de patinage est détecté pour la roue associée à chaque unité de contrôle de patinage, d'une valeur initiale sensiblement égale à celle de la pression d'actionnement de frein immédiatement avant que le point de patinage soit détecté, à une pression inférieure.

6. Système de freinage selon la revendication 5, caractérisé en ce que la pression à laquelle la pression de mémoire baisse pendant un patinage dépend de la durée du patinage.

7. Système de freinage selon la revendication 5 ou la revendication 6, caractérisé en ce que les moyens de réduction de la pression de mémoire comportent un passage restreint (52, 53) faisant communiquer la chambre de mémoire (33, 34) avec le côté aval de la soupape de verrouillage (21).

8. Système de freinage selon la revendication 7 lorsque celle-ci dépend de la revendication 3, caractérisé en ce que les moyens de réduction de la pression de mémoire comportent un passage restreint (52, 53) faisant communiquer la chambre de mémoire (33, 34) avec le côté amont de la soupape-relais (27, 28).

9. Système de freinage selon l'une quelconque des revendications 5 à 8 lorsque celles-ci dépendent de la revendication 4, caractérisé en ce que le taux de réduction de la pression de mémoire dans la chambre de mémoire pendant un patinage est sensiblement égal au taux d'augmentation de la pression du fluide d'actionnement de frein qui s'écoule par delà la soupape de dérivation de verrouillage (40, 41).

10. Système de commande de patinage selon l'une quelconque des revendications précédentes, caractérisé en ce que l'essieu commun est l'essieu arrière d'un véhicule.

**Patentansprüche**

1. Fluiddruckbetätigtes Bremssystem für Fahrzeuge, mit einem Behälter (18, 19) für ein eine Radbremse (1, 2, 3, 4) betätigendes Bremsfluid, der das Fluid über eine Blockiersteuereinheit (14, 15) der Bremse zuführt, einer Leitung (23, 24), die ein Steuerfluid zu der Fluidsteuereinheit (14, 15) von einem Vorrat (29) zuführt, Sensoren (9, 10, 11, 12), die zum Erkennen eines Blockierens der Räder vorgesehen sind, und Mitteln (13), die auf ein von einem der Sensoren (9, 10, 11, 12) erzeugtes Blockiersignal ansprechend zur Betätigung von Ventilmitteln (27, 28) vorgesehen sind, um an dem Blockierpunkt den Druck des Steuerfluids und dadurch den des die Bremse betätigenden Fluids abzubauen, wobei die Einheit (14, 15) eine Speicherkammer (33, 34) zum Speichern eines Speicherdrucks aufweist, der von dem Steuerdruck und dadurch von dem Druck des die Bremse betätigenden Fluids, der an dem Blockierpunkt gegeben ist, abhängig ist, um einen Festwert oder Kniepunkt zwischen einer ersten und einer zweiten Stufe des Wiedereinsetzens der Bremse zu schaffen, wobei die Bremse in der ersten Stufe mit einer relativ höheren Intensität als in der zweiten Stufe wiedereingesetzt wird, die Bremse in der zweiten Stufe mit einer gegenüber der Intensität des Einsetzens der Bremse vor dem Erkennen des Blockierpunkts geringeren Intensität wiedereingesetzt wird, und die Bremsen (1, 2, 3, 4) an den Rändern an den gegenüberliegenden Enden einer gemeinsamen Achse durch gesonderte Blockiersteuersysteme (14, 15) gesteuert werden, dadurch gekennzeichnet, daß ein einziges, beiden Einheiten zugehöriges Sperrventil (21) vorgesehen ist, das an dem von einem Sensor (9, 10, 11, 12) an einem der Räder erkannten Blockierpunkt schließt, und ein auf Signale von wenigstens einem der Sensoren ansprechendes Steuermodul (13) das Sperrventil (21) betätigt, um die Rate der Zufuhr von Steuerfluid von dem Vorrat (29) zu steuern und um jede der Blockiersteuereinheiten (14, 15) für die jeweiligen Räder in Antwort nur auf die Blockiersignale zu steuern, die dem jeweiligen Rad zugehörig sind, dessen Blocksteuereinheit steuert, unabhängig von den dem anderen Rad auf der Achse zugehörigen Blockiersignalen.

2. Bremssystem nach Anspruch 1, dadurch gekennzeichnet, daß bei einem Fahren der Räder an den gegenüberliegenden Enden der Achse über Flächen mit unterschiedlichen Reibungskoeffizienten und bei einem Blockieren eines der Räder und einem Nicht-Blockieren des anderen der Räder während des Bremsens, das Steuermodul (13) das gemeinsame Sperrventil (21) zur Bewirkung eines eingeschränkten Flusses des Steuerfluids schließend steuert, die Blockiersteuereinheit (16, 17) an dem einen Rad zur Verringerung des Bremsdrucks in der Bremse des einen Rades bis zur Beendigung der Blockierung steuert und die Blockiersteuereinheit (14, 15) des anderen Rades zur Beaufschlagung der Bremse des anderen Rades, aber mit der Intensität der zweiten Stufe des Wiedereinsetzens der Bremse steuert, wobei die Bremse des einen Rads in der ersten und in der zweiten Stufe wiedereingesetzt wird, wenn das eine Rad nicht mehr blockiert, ohne erhebliche Minderung des Drucks, der auf die Bremse des anderen Rads aufgebracht wird, wenn das gemeinsame Sperrventil (21) geschlossen ist.

3. Bremssystem nach Anspruch 1 oder Anspruch 2, dadurch gekennzeichnet, daß jede der Blockiersteuereinheiten (14, 15) ein solenoid-betriebenes Relais-Ventil (27, 28) aufweist und das Modul (13) zur Lieferung von Erregungsstrom zu dem Sperrventil (21) und zu einem der Relais-Ventile (27, 28) in Antwort auf ein Signal von dem jeweiligen Sensor und danach zur Verursachung einer Enterregung des Solenoids des einen Relais-Ventils für eine modulierende Steuerung der jeweiligen Bremse betrieben wird, wobei der Strom in dem Sperrventil aufrechterhalten bleibt, damit dieses während des Bremszyklus geschlossen bleibt.

4. Bremssystem nach einem der vorangehenden Ansprüche, dadurch gekennzeichnet, daß eine mit einem die Sperrung überbrückenden Ventil (40, 41) versehene die Sperrung überbrückende Passage (42, 43) den Vorrat (92) mit einem Punkt in der Leitung (23, 24) stromabwärts des Sperrventils (21) verbindet und der Fluß des Steuerfluids mit der reduzierten Rate bei geschlossenem Sperrventil (21) durch die die Sperrung überbrückende Passage auftritt.

5. Bremssystem nach einem der vorangehenden Ansprüche, dadurch gekennzeichnet, daß die Speicherkammer (33, 34) jeder der Blockiersteuereinheiten (16, 17) ein zugehöriges Speicherdruckreduziermittel (52, 53) aufweist, das eine Absenkung des Speicherdrucks, der in der Speicherkammer gespeichert ist, wenn für das der jeweiligen Blockiersteuereinheit zugehörige Rad ein Blockierpunkt erkannt wird, von einem Ausgangswert, der im wesentlichen dem Druck, der unmittelbar vor dem Erkennen des Blockierpunkts gegeben war, auf einen niedrigeren Druckpunkt bewirkt.

6. Bremssystem nach Anspruch 5, dadurch gekennzeichnet, daß der Druck, auf den der Speicherdruck während eines Blockierens gesenkt wird, von der Dauer des Blockierens abhängt.

7. Bremssystem nach Anspruch 5 oder Anspruch 6, dadurch gekennzeichnet, daß die Speicherdrucksenkmittel eine die Speicherkammer (33, 34) mit der stromabwärts gelegenen Seite des Speicherventils (21) verbindende eingeengte Passage (52, 53) aufweist.

8. Bremssystem nach Anspruch 7 in Abhängigkeit von Anspruch 3, dadurch gekennzeichnet, daß das Speicherdrucksenkmittel eine eingeengte Passage (52, 53) aufweist, die die Speicherkammer (33, 34) mit der stromabwärts gelegenen Seite des Relais-Ventils (27, 28) verbindet.

9. Bremssystem nach einem der Ansprüche 5 bis 8 in Abhängigkeit von Anspruch 4, dadurch gekennzeichnet, daß die Rate der Absenkung des Speicherdrucks in der Speicherkammer während eines Blockierens im wesentlichen der Rate des Anstiegs des Drucks in dem die Bremsung bewirkenden Fluid, die hinter dem die Sperrung überbrückenden Ventil (40, 41) fließt, entspricht.

10. Blockiersteuersystem nach einem der vorangehenden Ansprüche, dadurch gekennzeichnet, daß die gemeinsame Achse die Hinterachse

eines Fahrzeugs ist.

FIG.1

FIG.2.

FIG 4.

FIG. 5.

FIG.6.

FIG.3.

FIG 7

FIG 8.

FIG 9.